# EUROPÄISCHE PATENTANMELDUNG

(11) **EP 0 855 576 A1**
(43) Veröffentlichungstag der Anmeldung: **29.07.1998**
(21) Anmeldenummer: 97101162.2
(22) Anmeldetag: 25.01.1997
(51) Int. Cl.: G01F 1/00, G01F 15/08

(54) **Verfahren und Anlage zum Messen des Volumens durchströmender Flüssigkeiten**

(71) Anmelder: ALFONS HAAR Maschinenbau GmbH & Co., D-22547 Hamburg (DE)
(72) Erfinder: Haar, Thomas, Dipl.-Ing., 25469 Halstenbek (DE)
(74) Vertreter: Patentanwälte Hauck, Graalfs, Wehnert, Döring, Siemons

(57) **Zusammenfassung**

Verfahren zum Messen des Volumens durchströmender Flüssigkeiten unter Meidung von Meßfehlern durch unzulässig hohe Gasanteile, bei dem der Gasanteil der durch eine Leitungsstrecke strömenden Flüssigkeit erfaßt, die Abweichung des erfaßten Gasanteiles von einem zulässigen Wert ermittelt, der Volumenstrom der Flüssigkeit in Abhängigkeit von der ermittelten Abweichung in mehreren Stufen und/oder stetig beeinflußt und das Volumen durchströmender Flüssigkeit gemessen wird.

## Beschreibung

Die Erfindung bezieht sich auf ein verfahren und eine Anlage zum Messen des Volumens durchströmender Flüssigkeiten unter Meidung von Meßfehlern durch unzulässig hohe Gasanteile.

Verfahren und Anlage sind insbesondere für den Einsatz in Tankfahrzeugen bestimmt, beispielsweise für Heizöl oder für Dieselkraftstoff. Bei der Flüssigkeitsabgabe ist ein Lufteintrag möglich, der betriebsbedingt durch einen Wechsel von einer zu entleerenden Kammer des Tankfahrzeuges auf eine andere Kammer oder beim Leerfahren einer Kammer eintritt. Eine Aufgasung der Flüssigkeit kann aber auch auf Undichtigkeiten im Leitungssystem beruhen. Ferner kann es bei Schwerkraftförderung zu einem Lufteintrag infolge Unterdrucks im Leitungssystem kommen. Gasanteile verfälschen jedoch die Messung des abgegebenen Flüssigkeitsvolumens. Eichbestimmungen für die Volumenmessung schreiben deshalb vor, daß der Gasanteil der Flüssigkeit zulässige Werte nicht überschreiten darf.

Hierzu sind herkömmliche Meßanlagen mit Entgasungseinrichtungen ausgestattet worden, die einen von der Flüssigkeit durchströmten Sammelbehälter für Luft aufweisen. Diese beispielhaft als "Gasmeßverhüter" ausgeführten Entgasungseinrichtungen haben eine Niveauabfrage, die die Ansammlung eines bestimmten Gasvolumens feststellt, um den Flüssigkeitsstrom zu stoppen und den Abscheidebehälter zu entlüften. Hierdurch wird sichergestellt, daß nachgeordnete Meßanlagen nicht unzulässig mit Gasen derart gefüllt werden, daß bei der Messung von strömenden Flüssigkeiten unzulässige Meßfehler auftreten.

Außerdem gibt es schon Meßanlagen mit elektronischen Sensoren, die mit einer einstellbaren Sensibilität Luftblasen in einer strömenden Flüssigkeit feststellen können. Bei Überschreiten eines Schwellenwertes des Luftanteiles wird der Flüssigkeitsstrom gestoppt und die Leitungsstrecke entlüftet, um einen durch die Luftanteile verursachten unzulässigen Meßwert zu vermeiden.

All diesen Systemen gemeinsam ist der Nachteil, daß mit einem hohen technischen Aufwand (Gasmeßverhüter bzw. Blasensensor mit aufwendiger Entgasungseinrichtung) doch nur Signale für zwei Systemzustände erzeugt werden. In dem einen Zustand gibt die Anlage mit voller Leistung Flüssigkeit ab und im anderen Zustand ist die Flüssigkeitsabgabe vollständig unterbrochen und die Entlüftung eingeschaltet. Dies führt bei der eichpflichtigen Flüssigkeitsabgabe oft zu nervösen Schaltvorgängen zwischen den beiden Systemzuständen. Diese Betriebsweise kann die Flüssigkeitsabgabe erheblich verzögern. Außerdem haben die bekannten Meßanlagen einen erheblichen Platzbedarf, der von den Fahrzeugbauern zu berücksichtigen ist. Dies gilt insbesondere für Gasmeßverhüter, die als kompakte Aggregate ausgeführt werden.

Davon ausgehend liegt der Erfindung die Aufgabe zugrunde, ein Verfahren und eine Anlage zum Messen des Volumens durchströmender Flüssigkeit mit verringertem technischem Aufwand, größerer Leistungsfähigkeit und reduziertem Platzbedarf zu schaffen.

Die Aufgabe wird durch ein Verfahren mit den Merkmalen des Anspruches 1 und durch eine Anlage mit den Merkmalen des Anspruches 13 gelöst. Vorteilhafte Ausgestaltungen von Verfahren und Anlage sind in den Unteransprüchen angegeben.

Bei der erfindungsgemäßen Meßtechnik wird der Gasanteil der durch die Leitungsstrecke strömenden Flüssigkeit permanent oder in Zeitabständen erfaßt. Ferner wird in Abhängigkeit von der Abweichung des erfaßten Gasanteiles von einem zulässigen Wert der Volumenstrom der Flüssigkeit in dem Sinne beeinflußt, daß er bei überhöhtem Gasanteil zumindest so weit reduziert wird, bis der Gasanteil der Flüssigkeit den zulässigen Wert erreicht. Umgekehrt kann bei einem Gasanteil unterhalb des zulässigen Wertes der Volumenstrom so weit erhöht werden, bis der Gasanteil der Flüssigkeit den zulässigen Wert annimmt. Hierbei macht die Erfindung von der Erkenntnis Gebrauch, daß der Gasanteil der Flüssigkeit durch Selbstausgasung bei reduzierter Durchflußrate abnimmt. Dieser Gasanteil wird in einem dem Gasblasensensor nachgeordneten Behälter oder in einer Beruhigungsstrecke gesammelt und ab einem bestimmten Niveau der Flüssigkeit bei Flüssigkeitsstillstand abgeführt. Die Erfindung nutzt die Abhängigkeit von Gasanteil und Durchflußrate jedoch nicht für eine einfache Zweipunktschaltung, die als Zustände nur die vollständige Volumenstromunterbrechung und volle Volumenstromabgabe kennt. Vielmehr sieht sie vor, den Volumenstrom in Abhängigkeit von der ermittelten Abweichung des erfaßten Gasanteiles vom zulässigen Wert in mehreren Stufen und/oder stetig zu beeinflussen. Auf diese Weise wird erreicht, daß das Volumen durchströmender Flüssigkeit stets bei einer eichgerechten Abgabe ermittelt wird.

Mit der erfindungsgemäßen Meßtechnik kann der eichpflichtige Flüssigkeitsstrom entlang einer vorgegebenen Eichfehlergrenze bis nahe zur getrennten Flüssigkeit-/Luftphasen-Strömung heruntergeregelt werden, ohne daß die Flüssigkeitsabgabe unterbrochen werden muß und die Meßanlage einen unzulässigen Fehler macht. Die eichpflichtige Flüssigkeitsabgabe aus Tankfahrzeugen kann also sehr effizient ohne häufige lästige Ein- und Abschaltvorgänge der Meßanlage erfolgen. Die Meßanlage kann wesentlich kleiner, leichter und variabler von den Fahrzeugaufbauern ausgeführt und installiert werden.

Der zulässige Wert des Gasanteils kann einstellbar sein, so daß die Meßtechnik den jeweiligen Anforderungen anpaßbar ist. Ferner ist von Vorteil, daß eine elektronische Verarbeitung der Meßgröße und Ermittlung der Stellgröße möglich ist, wobei auf eine ohnehin vorhandene Elektronik solcher Meßsysteme zurückgegriffen werden kann.

Zum Erfassen des Gasanteils der Flüssigkeit kann eine auch als "Gasblasensensor" bezeichnete Einrichtung zum Einsatz kommen. Diese kann den Gasanteil optisch oder akustisch erfassen, z.B. aufgrund von Reflexionseffekten. Hierzu kann der durchströmten Leitungsstrecke ein Lichtsender und Lichtempfänger zugeordnet sein. Zwecks Ermittlung eines korrigierten Wertes kann die Einrichtung den erfaßten Gasanteil prüfen.

Der Gasblasensensor dieser neuen Prägung ist mit einer Auswerteelektronik in der Lage, den in einer momentanen Flüssigkeitsströmung existierenden Luftanteil quantitativ zu bestimmen. Dieselbe Einrichtung kann außerdem das zulässige Flüssigkeitsniveau der Entgasungseinrichtung überwachen, um bei Unterschreitung eines zulässigen Wertes einen Entlüftungsvorgang auszulösen. Wie oben bereits erwähnt, kommt es bei niedrigen Durchsatzgeschwindigkeiten in der Leitungsstrecke zu einer Entmischung von Flüssigkeit und Gas, bei der allerdings das Gasvolumen aus meßtechnischen Gründen bestimmte Grenzen nicht überschreiten darf.

Zur Eliminierung von Fehlern kann der Durchgang eines Prüfsignals (Lichtstrahl oder gerichtetes akustisches Signal) in einer Aussenderichtung durch die Flüssigkeit und die Reflexion des Prüfsignals quer zu seiner Aussenderichtung erfaßt werden und kann der Gasanteil der Flüssigkeit aus dem Quotienten der erfaßten Werte ermittelt werden. Diese Quotientenbildung mindert deutlich Störeinflüsse z.B. durch Trübung des Mediums oder durch Verschmutzung von Sensoren.

Die Flüssigkeit kann mittels einer Verdrängerpumpe durch die Leitungsstrecke gepumpt werden. Wenn die Flüssigkeit unter Überwindung eines Gegendruckes gepumpt wird, der durch ein Druckhalteventil erzeugt werden kann, bricht bei einem Lufteinschluß der Volumenstrom in der Pumpe zusammen. Hierdurch kann bereits der zulässige Wert des Gasanteils der Flüssigkeit erreicht werden. Die Pumpe kann also die Einrichtungen zum Erfassen des Gasanteiles, zum Ermitteln der Abweichung vom zulässigen Wert und zum Beeinflussen des Volumenstromes der Flüssigkeit in einfachen Meßanlagenausführungen ersetzen. Bevorzugt wird dieser Effekt jedoch in Verbindung mit den genannten Einrichtungen genutzt.

Die Einrichtung zum Beeinflussen des Volumenstromes ist bevorzugt eine Pumpe mit einstellbarem Volumenstrom. Diese kann drehzahlkonstant angetrieben und zum Beeinflussen des Volumenstromes von einem einstellbaren Überdruckventil überbrückt sein.

Zum Fördern der Flüssigkeit kann aber auch die Leitungsstrecke als Schwerkraftstrecke ausgebildet sein. Dann kann als Einrichtung zum Beeinflussen des Volumenstromes der Flüssigkeit ein einstellbares Ventil dienen.

Bevorzugt wird die Meßtechnik mit einer Entgasung kombiniert. Bei dieser kann ein Sammelbehälter erheblich kleiner als bei bekannten Entgasungseinrichtungen ausgeführt werden (z.B. etwa 6 gegenüber 20 bis 25 Litern).

Nachfolgend werden Ausführungsbeispiele der Erfindung mit Bezug auf die anliegenden Zeichnungen erläutert. In den Zeichnungen zeigen:
- Fig. 1: eine Meßanlage mit Verdrängerpumpe in grobschematischer Ansicht;
- Fig. 2 und 3: ein optischer Gasblasensensor in Seitenansicht (Fig. 2) und im Querschnitt (Fig. 3);
- Fig. 4: eine Meßanlage mit Schwerkraftförderung in grobschematischer Ansicht.

Bei der nachfolgenden Beschreibung verschiedener Ausführungsbeispiele sind für identische Anlagenteile übereinstimmende Bezugsziffern eingesetzt. Insoweit hat die Beschreibung für sämtliche Ausführungsformen Gültigkeit.

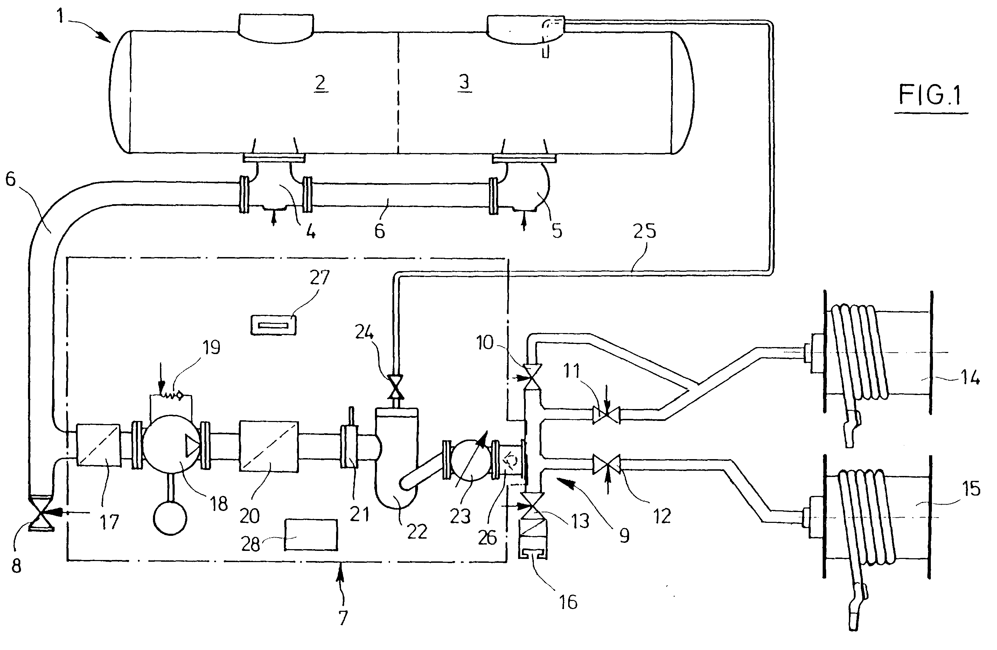

Gemäß Fig. 1 ist ein Tank 1 eines Tankwagens in verschiedene Tankkammern 2, 3 unterteilt. Diese sind über Anschlußstutzen 4, 5 und Rohrleitungen 6 an eine Meßanlage 7 angeschlossen, die sich in der Zeichnung innerhalb der strichpunktierten Systemgrenze befindet. Vor der Meßanlage 7 kann die Flüssigkeit im Bedarfsfalle über ein Ventil 8 abgezogen werden. Hinter der Meßanlage 7 befindet sich ein Flüssigkeitsverteiler 9, der die Flüssigkeit über Absperrorgane 10, 11, 12, 13 an Schlauchtrommeln 14, 15 oder eine Ansteckkupplung 16 weitergibt.

Die Meßanlage 7 hat eingangsseitig einen Pumpenschutzfilter 17, durch den die Flüssigkeit an eine drehzahlkonstant betriebene Verdrängerpumpe 18 weitergeleitet wird. Die Verdrängerpumpe 18 ist von einem pneumatisch geregelten Überstromventil 19 überbrückt.

An die Druckseite der Verdrängerpumpe 18 ist ein Zählerschutzfilter 20 angeschlossen. Hinter dem Zählerschutzfilter 20 wird die Flüssigkeit zu einem Gasblasensensor 21 geführt, dessen Konstruktion weiter unten noch näher beschrieben wird. An den Ausgang des Gasblasensensors 21 ist ein Entgasungsbehälter 22 angeschlossen. Vom Gasblasensensor 21 gelangt die Flüssigkeit etwa in den Oberbereich des Entgasungsbehälters 22. In Bodennähe des Entgasungsbehälters 22 wird sie abgezogen und eine Einrichtung zum Messen des Volumens in Form eines Zählers 23 zugeführt.

Oben an den Entgasungsbehälter 22 ist ein Entlüftungsventil 24 angeschlossen, das über eine Leitung 25 mit den Kammern 2, 3 des Tanks 1 verbunden ist.

Der Ausgang des Zählers 23 ist mit einem Druckhalteventil 26 verbunden. Am Ausgang des Druckhalteventils 26 ist die Meßeinrichtung 7 an den Flüssigkeitsverteiler 9 angeschlossen.

Die Meßeinrichtung 7 weist überdies noch eine elektronische Steuerung 27 und eine pneumatische Steuerung 28 auf. Die elektronische Steuerung 27 ist mit dem Gasblasensensor 21 verbunden und wertet dessen Signale aus. Sie liefert Steuersignale für die pneumatische Steuerung 28, welche die verschiedenen Ventile der Anlage steuert. Außerdem können an die Steuerungen 27, 28 Registrier- und Anzeigeeinrichtungen angeschlossen sein.

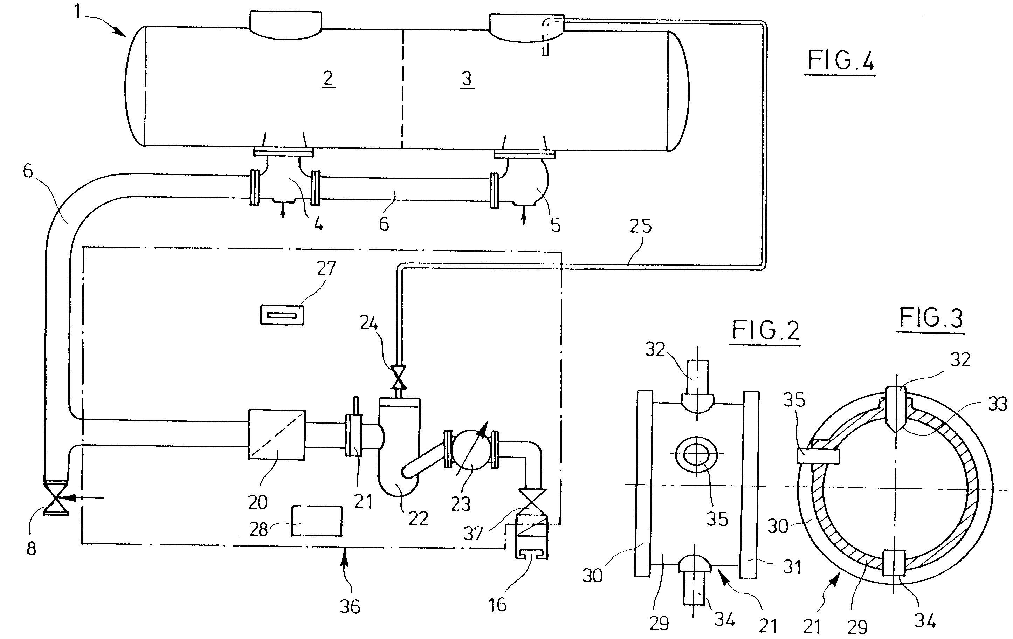

Gemäß Fig. 2 und 3 hat der Gasblasensensor 21 einen im wesentlichen zylindrischen Grundkörper 29 mit Anschlußflanschen 30, 31 an den beiden Enden. Oben ist in den Grundkörper 29 ein Infrarotlicht-Sender und -Empfänger 32 eingebaut, der eine diagonal durch den Querschnitt des Grundkörpers 29 gerichtete Aussendeachse hat. Am unteren Ende des Senders und Empfängers 32 ist ein Prisma 33 plaziert, das bei Anwesenheit von Flüssigkeit IR-Strahlung durchläßt und bei Abwesenheit von Flüssigkeit ins Innere des Senders und Empfängers 32 umlenkt. Das reflektierte Licht wird von dem integrierten Empfänger des Senders und Empfängers 32 detektiert.

Unten im Grundkörper ist ein IR-Empfänger 34 angeordnet, der auf die Aussendeachse des Senders und Empfängers 32 ausgerichtet ist. Ferner ist ein weiterer Empfänger 35 in den Oberbereich des Grundkörpers 29 integriert. Dieser Empfänger 35 ist senkrecht zur Aussendeachse des Senders und Empfängers 32 ausgerichtet.

Wenn der Gasblasensensor 21 mit Flüssigkeit durchströmt wird, vermindert sich die auf den Empfänger 34 fallende Lichtenergie mit zunehmendem Gasblasenanteil der Strömung und die zum Empfänger 35 reflektierte bzw. gestreute Lichtenergie steigt mit dem Gasblasenanteil der Strömung an. Die Zusammenhänge sind zumindest bei den hier interessierenden Gasblasenkonzentrationen von 0 bis 5 % linear. Eine nachgeordnete Auswerteeinrichtung bildet die Quotienten aus den von den Empfängern 34 und 35 gemessenen Strahlungswerten. Dieser Quotient ist von Störungseinflüssen weitgehend unabhängig.

Der Gasblasensensor 21 ist zugleich ein Niveausensor. Wenn nämlich der Flüssigkeitsspiegel unter das Prisma 33 am unteren Ende des Senders und Empfängers 32 fällt, detektiert der eingebaute Empfänger Lichteinfall und zeigt damit das Unterschreiten dieses Flüssigkeitsniveaus an. Für eine Einstellung des angezeigten Flüssigkeitsniveaus kann der Sender und Empfänger 32 auf der Diagonalachse verschiebbar und in beliebiger Verschiebeposition arretierbar sein.

Bei Flüssigkeitsabgabe aus dem Tank 1 durch die Meßanlage 7 erfaßt der Gasblasensensor 21 den jeweiligen Gasblasenanteil bzw. das Niveau der Flüssigkeit. Bei Überschreiten eines zulässigen Wertes sorgen die Steuerungen 27, 28 durch Verstellen des Überströmventiles 19 für eine Änderung des Flüssigkeitsstromes, bis der zulässige Wert erreicht oder unterschritten wird. Wird der zulässige Wert unterschritten, kann der geförderte Flüssigkeitsstrom durch entsprechende Steuerungsmaßnahmen bis zum Erreichen des zulässigen Wertes erhöht werden. Wenn das Flüssigkeitsniveau im Leitungssystem unter den von Sender und Empfänger 32 im Gasblasensensor detektierbaren Wert fällt, besteht die Gefahr des Mitreißens unzulässig hoher Gasanteile. Dann sorgen die Steuerungen 27, 28 dafür, daß keine weitere Flüssigkeit mehr in die Meßanlage 7 gelangt und lüften den Entlüftungsbehälter 22 über das Entlüftungsventil 24.

Auf diese Weise ist sichergestellt, daß Flüssigkeit nicht mit unzulässig hohen Gasanteilen in den Zähler 23 gelangt. Das diesem nachgeordnete Druckhalteventil 26 sorgt überdies dafür, daß Gasanteile der Flüssigkeit bereits in der Verdrängerpumpe 18 komprimiert werden und die Messung nicht verfälschen. Die Summe aller Maßnahmen garantiert ein eichgerechtes Abpumpen mit sehr hohen Abgabeleistungen.

Bei der Anlage gemäß Fig. 4 ist ein Anschlußstutzen 16 unterhalb des Tanks 1 angeordnet und wird eine Flüssigkeitsabgabe durch Schwerkraftförderung bewirkt. Zwischen Tank 1 und Anschlußstutzen 16 ist eine vereinfachte Meßanlage 36 für das durchströmende Flüssigkeitsvolumen angeordnet. Die Meßanlage 36 hat eingangsseitig ein Zählerschutzfilter 20, dem der Gasblasensensor 21 nachgeordnet ist. Dieser speist wiederum den Entlüftungsbehälter 22, dem der Zähler 23 nachgeordnet ist. Der Entlüftungsbehälter 22 wird ebenfalls über ein Entlüftungsventil 24 in den Tank 1 belüftet.

Dem Zähler 23 ist anstatt eines Druckhalteventiles ein einstellbares Abgabeventil 37 nachgeordnet. Das Abgabeventil 37 wird über die elektronische Steuerung 27 und die pneumatische Steuerung 28 angesteuert.

Detektiert bei Flüssigkeitsabgabe der Gasblasensensor 21 einen zu hohen Gasanteil der Flüssigkeit, so wird über die Steuerung 27, 28 das Abgabeventil geschlossen, wodurch die Flüssigkeitsabgabe gedrosselt wird und der Gasanteil fällt. Umgekehrt kann bei niedrigen Gasanteilen das Ventil 37 weiter geöffnet werden. Auf diese Weise kann die Meßanlage 36 den Flüssigkeitsstrom stets so einregeln, daß ein zulässiger Gasanteil eingehalten wird. Fällt das Niveau der Flüssigkeit im Gasblasensensor 21 unter den zulässigen Wert, so wird Flüssigkeitseinspeisung in den Tank 36 unterbunden und über das Entlüftungsventil 24 gelüftet, bis infolge Erreichens des zulässigen Wertes die Anlage weiterbetrieben werden kann. So ist auch bei Schwerkraftabgabe eine maximale Abgabeleistung erreichbar.

## Patentansprüche

1. Verfahren zum Messen des Volumens durchströmender Flüssigkeiten unter Meidung von Meßfehlern durch unzulässig hohe Gasanteile, bei dem der Gasanteil der durch eine Leitungsstrecke strömenden Flüssigkeit erfaßt, die Abweichung des erfaßten Gasanteiles von einem zulässigen Wert ermittelt, der Volumenstrom der Flüssigkeit in Abhängigkeit von der ermittelten Abweichung in mehreren Stufen und/oder stetig beeinflußt und das Volumen durchströmender Flüssigkeit gemessen wird.

2. Verfahren nach Anspruch 1, bei dem der durch Selbstausgasung der Flüssigkeit ausgetretene Gasanteil in der Leitungsstrecke und/oder in einem nachgeordneten Behälter vor dem Messen des Volumenstromes durchströmender Flüssigkeit gesammelt, in der Leitungsstrecke und/oder dem Behälter das Niveau der Flüssigkeit erfaßt und der ausgetretene Gasanteil ab einem bestimmten Niveau der Flüssigkeit abgeführt wird.

3. Verfahren nach Anspruch 1 oder 2, bei dem der Gasanteil und/oder das Niveau der Flüssigkeit optisch oder akustisch erfaßt wird.

4. Verfahren nach einem der Ansprüche 1 bis 3, bei dem der erfaßte Gasanteil und/oder das erfaßte Niveau der Flüssigkeit geprüft wird.

5. Verfahren nach einem der Ansprüche 1 bis 4, bei dem der Durchgang eines Prüfsignals in seiner Aussenderichtung durch die Flüssigkeit und die Reflexion des Prüfsignals quer zu seiner Aussenderichtung erfaßt werden und der Gasanteil der Flüssigkeit aus dem Quotienten der erfaßten Werte ermittelt wird.

6. Verfahren nach einem der Ansprüche 1 bis 5, bei dem der zulässige Wert des Gasanteils und/oder des Niveaus der Flüssigkeit eingestellt wird.

7. Verfahren nach einem der Ansprüche 1 bis 6, bei dem die Flüssigkeit mittels einer Verdrängerpumpe gegen einen Gegendruck gepumpt wird.

8. Verfahren zum Messen des Volumens durchströmender Flüssigkeiten unter Meidung von Meßfehlern durch unzulässig hohe Gasanteile, insbesondere nach einem der Ansprüche 1 bis 7, bei dem die Flüssigkeit unter Minderung ihres Gasanteils auf den zulässigen oder einen niedrigeren Wert mittels einer Verdrängerpumpe gegen einen Gegendruck gepumpt wird.

9. Verfahren nach Anspruch 7 oder 8, bei dem der Volumenstrom durch Rückführen eines mehr oder weniger großen Teils der gepumpten Flüssigkeit beeinflußt wird.

10. Verfahren nach einem der Ansprüche 1 bis 9, bei dem die Flüssigkeit durch Schwerkrafteinwirkung befördert wird.

11. Verfahren nach Anspruch 10, bei dem der Volumenstrom durch Ändern des Strömungsquerschnittes in der Leitungsstrecke beeinflußt wird.

12. Anlage zum Messen des Volumens durchströmender Flüssigkeiten unter Meidung von Meßfehlern durch unzulässig hohe Gasanteile, die eine Leitungsstrecke zum Durchströmen von Flüssigkeit, eine Einrichtung zum Erfassen des Gasanteils der Flüssigkeit in der Leitungsstrecke, eine Einrichtung zum Ermitteln einer von der Abweichung des erfaßten Gasanteils von einem zulässigen Wert abhängigen Stellgröße, eine mittels der Stellgröße in mehreren Stufen und/oder stetig einstellbare Einrichtung zum Beeinflussen des Volumenstromes der Flüssigkeit in der Leitungsstrecke und eine Einrichtung zum Messen des Volumens durchströmender Flüssigkeit in der Leitungsstrecke hat.

13. Anlage nach Anspruch 12, die eine optische oder akustische Einrichtung zum Erfassen des Gasanteils mit einem Sender und einem Empfänger für Licht oder Schall hat.

14. Anlage nach Anspruch 13, bei der die optische oder akustische Einrichtung einen Sender, einen auf der Achse des Senders und einen quer zu dieser Achse angeordneten Empfänger hat.

15. Anlage nach Anspruch 14, bei der die Einrichtung zum Erfassen des Gasanteiles den Gasanteil anhand des Quotienten der von den beiden Empfängern ermittelten Meßsignale bestimmt.

16. Anlage nach einem der Ansprüche 12 bis 15, bei der die Einrichtung zum Erfassen des Gasanteils eine elektrische Meßgröße liefert.

17. Anlage nach einem der Ansprüche 12 bis 16, bei der die Einrichtung zum Erfassen des Gasanteils das Niveau der Flüssigkeit in der Leitungsstrecke und/oder in einem nachgeordneten Behälter vor der Einrichtung zum Messen durchströmender Flüssigkeit erfaßt, in der Leitungsstrecke und/oder in dem Behälter stromaufwärts der Einrichtung zum Messen eine Entgasungseinrichtung angeordnet ist und die Entgasungseinrichtung den in der Leitungsstrecke und/oder in den Behälter ausgetretenen Gasanteil ab einem bestimmten Niveau der Flüssigkeit abführt.

18. Anlage nach einem der Ansprüche 12 bis 17, bei der die Einrichtung zum Ermitteln der Stellgröße einen einstellbaren zulässigen Wert des Gasanteiles hat.

19. Anlage nach einem der Ansprüche 12 bis 18, bei der die Einrichtung zum Ermitteln der Stellgröße eine Elektronik ist.

20. Anlage nach einem der Ansprüche 12 bis 19, bei der der Leitungsstrecke eine Verdrängerpumpe zum Fördern der Flüssigkeit vorgeordnet ist.

21. Anlage nach Anspruch 20, bei der die Leitungsstrecke stromabwärts der Einrichtung zum Messen ein Druckhalteventil hat.

22. Anlage nach Anspruch 20 oder 21, bei der eine Verdrängerpumpe mit einstellbarem Förderstrom die Einrichtung zum Beeinflussen des Volumenstromes ist.

23. Anlage nach Anspruch 22, bei der die Verdrängerpumpe drehzahlkonstant angetrieben ist und von einem einstellbaren Überdruckventil als Einrichtung zum Beeinflussen des Volumenstromes überbrückt ist.

24. Anlage nach einem der Ansprüche 12 bis 19, bei der die Leitungsstrecke als Schwerkraftstrecke zum Fördern der Flüssigkeit durch Schwerkrafteinwirkung ausgebildet ist.

25. Anlage nach Anspruch 24, bei der stromabwärts der Einrichtung zum Messen ein einstellbares Ventil als Einrichtung zum Beeinflussen des Volumenstroms der Flüssigkeit angeordnet ist.
